# EUROPEAN PATENT APPLICATION

(11) **EP 4 052 616 A1**
(43) Date of publication of application: **07.09.2022**
(21) Application number: 22159925.1
(22) Date of filing: 03.03.2022
(51) Int. Cl.: A47J 31/06, A47J 31/30, A47J 31/44, A47J 31/36

(54) **PORTAFILTER AND COFFEE MAKER HAVING THE SAME**

(30) Priority: 05.03.2021 CN 202110253261
(71) Applicant: Tsann Kuen (Zhangzhou) Enterprise Co., Ltd., Fujian 363107 (CN)
(72) Inventor: XU, Qingzhe, Zhanzhou, Fujian, 363107 (CN); YAO, Xiangyu, Zhangzhou, Fujian, 363107 (CN); YE, Lin, Zhangzhou, Fujian, 363107 (CN)
(74) Representative: Hübner, Gerd

(57) **Abstract**

A portafilter includes a portafilter unit (1), a filter unit (2), a retainer unit (3), and a resilient member (4). The portafilter unit (1) includes a base seat (11). The filter unit (2) includes a filter holding module (21). The retainer unit (3) includes a retaining member (31) and a drive member (32) that are mounted on the base seat (11) and that is operable to drive swing movement of the retaining member (31) to a releasing position. The filter holding module (21) is downwardly movable against a resilient force of the resilient member (4) until the filter holding module (21) engages the retaining member (31), and the filter holding module (21) is disengaged when the retaining member (31) is driven by the driving member (32) to move to the releasing position.

## Description

The disclosure relates to a portafilter, and more particularly to a portafilter from which expended coffee puck can be easily removed after brewing, and a coffee maker using the same.

A conventional portafilter is used to make coffee by being used to hold ground coffee and then being attached to a coffee maker to brew coffee. The conventional portafilter includes a portafilter basket and a handle. When the portafilter is to be used, a user places a suitable amount of ground coffee in the protafilter basket and tamps the ground coffee into a coffee puck, then the user holds the conventional portafilter via the handle and attaches the conventional portafilter to the coffee maker. When the coffee maker finishes brewing the coffee, the user detaches the conventional portafilter from the coffee maker, turns the conventional portafilter upside down, and taps or shakes violently the conventional portafilter so that the expended coffee puck may be released from the conventional portafilter. For the conventional protafilter, the coffee puck removal process may be quite noisy and during the tapping and shaking the conventional portafilter may be damaged.

Therefore, an object of the disclosure is to provide a portafilter and a coffee maker that can alleviate at least one of the drawbacks of the prior art.

According to one aspect of the disclosure the portafiler includes a portafilter unit, a filter unit, a retainer unit, and a resilient member. The portafilter unit including a base seat and a surrounding wall that is connected to a top peripheral end of the base seat. The filter unit is mounted in the portafilter unit, includes a filter holding module, and is movable relative to the portafilter unit. The resilient member is connected to a bottom end of the filter holding module. The retainer unit includes at least one retaining member and a drive member. The at least one retaining member is mounted on the base seat, and is swingable relative to the base seat between a retaining position and a releasing position. The drive member is mounted on the base seat and is operable to drive movement of the at least one retaining memebr to the releaseing position. When the at least one retaining member is at the retaining position, the fitler holding module is downwardly movable relative to the portafilter unit against a resilient force of the resilient member until the filter holding module engages the at least one retaining member to position the filter holding module relative to the portafilter unit. The filter holding module is disengaged from the at least one retaining member when the at least one retaining memebr is driven by the driving member to move to the releasing position, and is propelled upwardly by a restoring force of the resilient member.

According to another aspect of the disclosure, the coffee maker includes the abovementioned portafilter.

Other features and advantages of the disclosure will become apparent in the following detailed description of the embodiments with reference to the accompanying drawings, of which:
Figure 1 is a perspective view illustrating an embodiment of a portafilter according to the present disclosure;
Figure 2 is a fragmentary exploded perspective view illustrating the embodiment;
Figure 3 is a fragmentary sectional view of the embodiment before use;
Figure 4 is a fragmentary sectional view of the embodiment showing configuration thereof when making a single serving of coffee;
Figure 5 is a fragmentary sectional view of the embodiment showing configuration thereof when making a double serving of coffee;
Figure 6 is a fragmentary sectional view of the embodiment showing configuration thereof after a coffee puck is removed; and
Figure 7 is a perspective view of a coffee maker mounted with the embodiment.

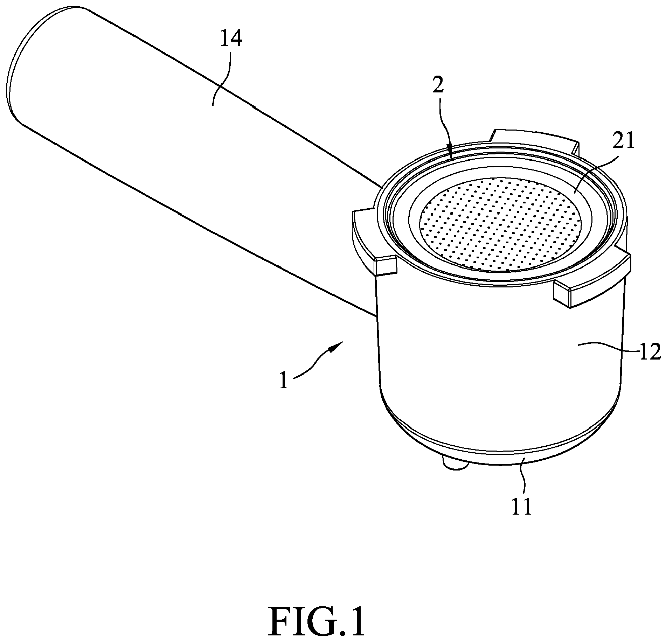

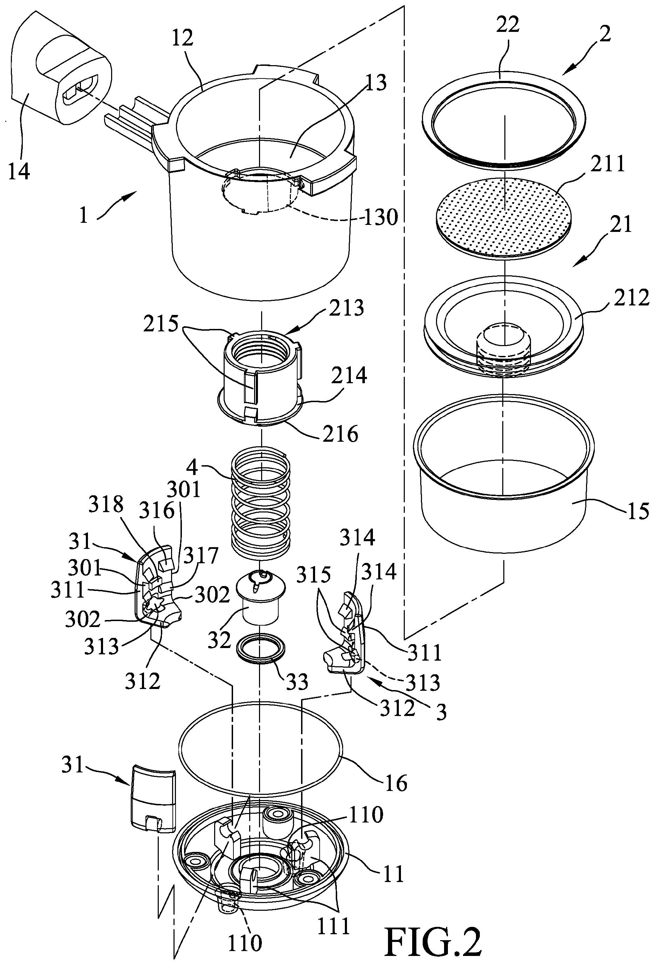

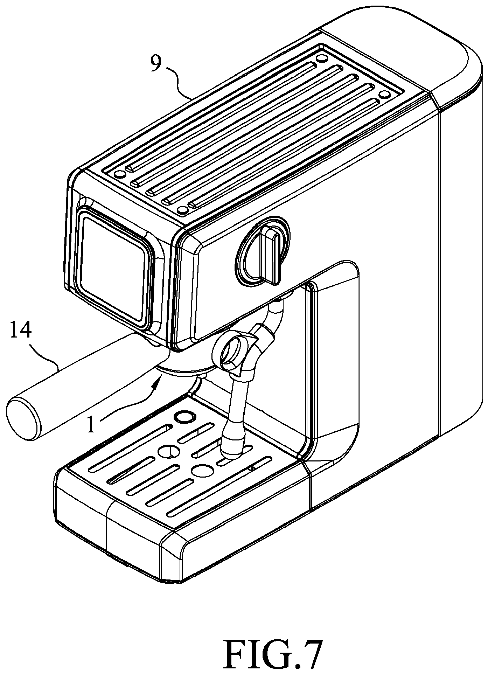

Referring to Figures 1 to 3, showing an embodiment of the portafilter according to the present disclosure. The portafilter is adapted to be used in a coffee maker 9 (see Figure 7), and includes a portafilter unit 1, a filter unit 2, a retainer unit 3, and a resilient member 4. The portafilter unit 1 includes a base seat 11, a surrounding wall 12, a dividing wall 13, a handle 14, a filter container wall 15, and a first seal member 16. The base seat 11 is formed with a plurality of nozzles 110 extending vertically therethrough. The surrounding wall 12 is connected to a top peripheral end of the base seat 11. The dividing wall 13 is annular, is connected transversely to an inner surface of the surrounding wall 12, and forms a through hole 130 that is centrally positioned relative to said surrounding wall 12. The handle 14 is mounted on an outer surface of the surrounding wall 12 and is adapted for a user to hold. The filter container wall 15 is substantially tubular, and is removably mounted to an inner surface of the surrounding wall 12. The first seal member 16 is disposed between the surrounding wall 12 and the base seat 11, and prevents liquid from leaking out of the portafilter unit 1 when the portafilter is used in coffee making.

The filter unit 2 is mounted in the portafilter unit 1, is movable relative to the portafilter unit 1, and includes a filter holding module 21 and a second seal 22. The filter holding module 21 includes a filter member 211, a mounting seat 212, and a locking seat 213. The filter member 211 has a plurality of filter holes being of a size that is big enough for liquids to pass though but small enough to prevent ground coffee from passing through. The filter member 211 and the filter container wall 15 co-operatively define a containing space 20 adapted for holding the ground coffee. The mounting seat 212 is funnel-shaped, is mounted with the filter member 211, and is coupled to a top end of the locking seat 213. The locking seat 213 is substantially tubular and extends vertically. The locking seat 213 is inserted through the through hole 130 of the portafilter unit 1, and has an engaging portion 214 that is located on a bottom end of the locking seat 213 and that is annular, and a plurality of angularly spaced-apart positioning flanges 215 that are located above the engaging portion 214. The engaging portion 214 has a bevelled edge 216 and has an outer diameter gradually and downwardly decreasing. The resilient member 4 is connected to a bottom end of the filter holding module 21. Specifically, the resilient member 4 is disposed under the mounting seat 212 and extends past the locking seat 213. The second seal 22 is disposed between the mounting seat 212 and the portafilter unit 1, more specifically the second seal 22 is between the mounting seat 212 and the filter container wall 15 of the portafilter unit 1 to prevent liquid from seeping into a gap that may form between the mounting seat 212 and the filter container wall 15.

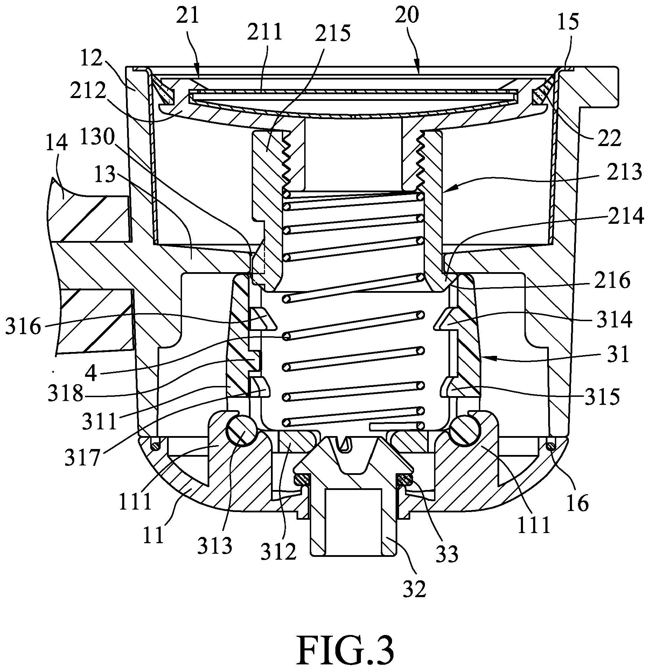

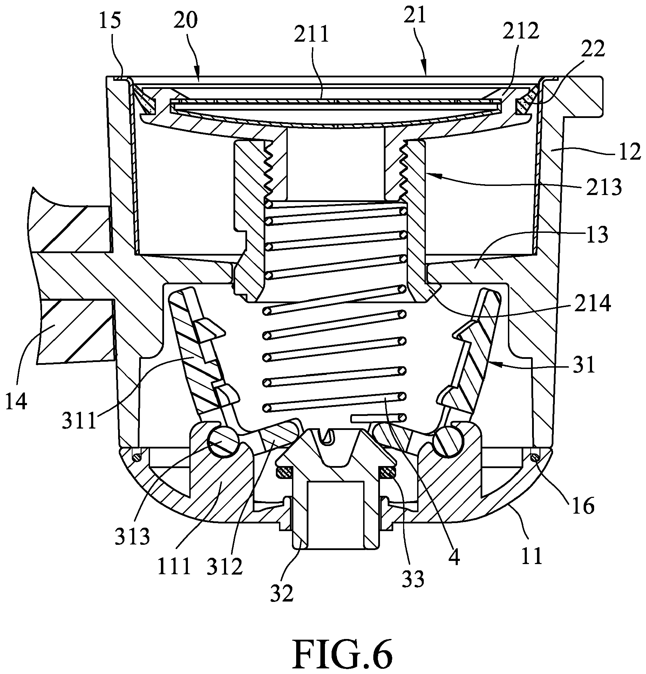

The retainer unit 3 includes at least one retaining member 31 that is mounted on the base seat 11, a drive member 32 that is mounted on the base seat 11, and a third seal member 33. The at least one retaining member 31 is swingable relative to the base seat 11 between a retaining position (see Figures 3 to 5) and a releasing position (see Figure 6) . When the at least one retaining member 31 is at the retaining position, the filter holding module 21 is downwardly movable relative to the portafilter unit 1 against a resilient force of the resilient member 4 until the filter holding module 21 engages the at least one retaining member 31 to position the filter holding module 21 relative to the portafilter unit 1. Subsequently, the filter holding module 21 can be disengaged from the at least one retaining member 31 by using the driving member 32 to drive the at least one retaining member 31 to move to the releasing position, and be propelled upwardly by a restoring force of the resilient member 4.

In this embodiment, the retaining unit 3 includes three retaining members 31 that are disposed around the locking seat 213, and the base seat 11 includes three connecting hubs 111 that are circularly disposed on a top side of the base seat 11. Each retaining member 31 includes a retaining portion 311, a bottom plate portion 312 that is transverse to a bottom end of the retaining portion 311, and a connecting portion 313 that is disposed between the retaining portion 311 and the bottom plate portion 312 and that is connected to the base seat 11 of the portafilter unit 1. The three connecting hubs 111 are respectively connected to the connecting portions 313 of the retaining members 31 so that each of the retaining members 31 can be swingable relative to the base seat 11 between the retaining position and the release position. It should be noted that when any one of the three retaining members 31 is in the retaining position, the retaining portion 311 of that one retaining member 31 is up-right, and that the bottom plate portions 312 of the retaining members 31 are disposed under and in contact with the resilient member 4.

The retaining portion 311 of each retaining member 31 has at least one first retaining groove 301 and at least one second retaining groove 302 below the first retaining groove 301, at least one first protruding block 314 and at least one second protruding block 315 under the first protruding block 314, and a restricting block 318. Specifically, the at least one first retaining groove 301 and the at least one second retaining groove 302 are respectively formed under the at least one first protruding block 314 and the at least one second protruding block 315. The at least one first protruding block 314 and the at least one second protruding block 315 respectively have a first oblique top surface 316, and a second oblique top surface 317.

The drive member 32 extends through the base seat 11, has an upper surface in contact with the bottom plate portion 312 of each of the retaining members 31, and is operable to drive movement of the retaining members 31 to the releasing position. More specifically, the drive member 32 is located at a center of the base seat 11. The third seal member 33 is disposed between the base seat 11 and the drive member 32, and prevents liquid leaking out from where the drive member 32 extends through the base seat 11.

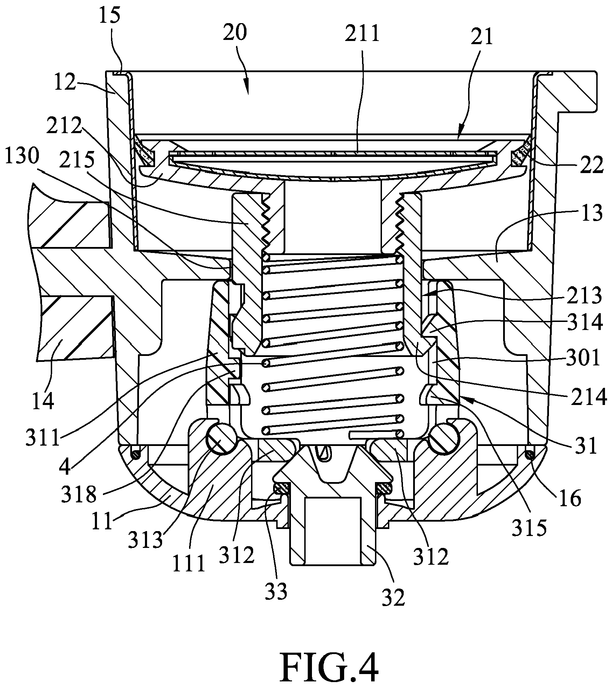

Referring to Figures 4 to 7, showing a coffee brewing procedure using the portafilter. When the portafilter according to the present disclosure is to be used, the filter holding module 21 is first pressed downward against the resilient force of the resilient member 4 until the engaging portion 214 of the locking seat 213 engages the first retaining grooves 301 of the retaining members 31, and in doing so, the position of the filter holding module 21 relative to the portafilter unit 1 is fixed in position (see Figure 4) . At this time, the engaging portion 214 of the locking seat 213 are biased by the resilient member 4 to abut upwardly against the at least one first protruding block 314 of the retaiing members 31. Now, ground coffee can be poured in the containing space 20 created by the downwardly fixing of the filter holding module 21 and tamped to form into a coffee puck.

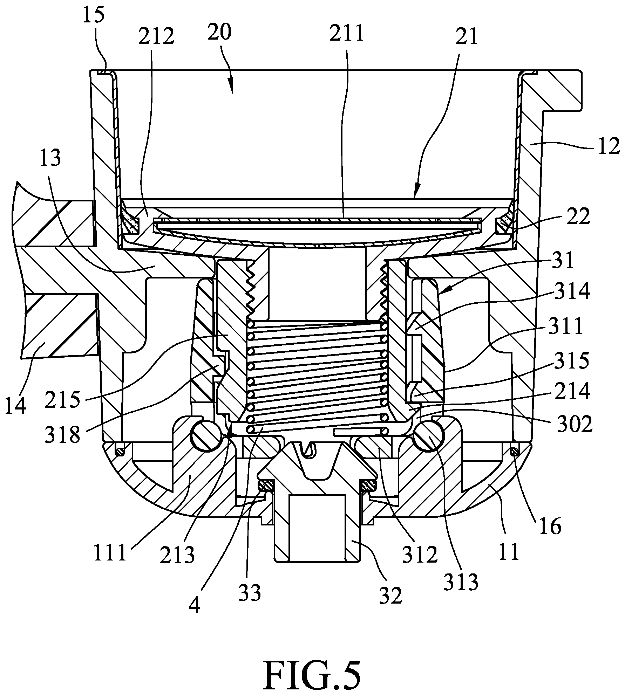

The description so far describes the procedure for brewing a single serving of coffee, when a double serving of coffee is desired, the filter holding module 21 of the filter unit 2 can be further pressed downward to enlarge the containing space 20 and accommodate more ground coffee. More specifically, to make the double serving, the retaining members 31 start from the position of the single serving, that is, at the retaining position with the engaging portion 214 of the locking seat 213 engaging the first retaining grooves 301 of the first retaining members 31. Next, the filter holding module 21 is pressed downward against the resilient force of the resilient member 4 until the engaging portion 214 of the locking seat 213 engages the second retaining grooves 302 of the retaining members 31 to position the filter holding module 21 relative to the portafilter unit 1 (see Figure 5), and the ground coffee for the double serving can thus be accommodated. It should be noted that, at this time, the engaging portion 214 of the locking seat 213 are biased by the resilient member 4 to abut upwardly against the second protruding blocks 315 of the retaiing members 31, and the restriction blocks 318 of the retaining portions 311 of the retaining members 31 serve the purpose of limiting maximum downward movement of the locking seat 213. If the user further pushes the filter holding module 21 downward, the positioning flanges 215 of the locking seat 213 will abut against the restriction blocks 318 to arrest the locking seat 213.

It should be noted that the first oblique top surface 316 of the at least one first protruding block 314 and the second oblique top surface 317 of the at least one second protruding block 315 co-operate with the engaging portion 214 and the bevelled edge 216 of the locking seat 213 to decrease friction between the locking seat 213 and the retaining members 31 during downward movement of the filter holding module 21.

On a further note, when the filter holding module 21 is pressed downward and the engaging portion 214 of the locking seat 213 is engaged with either the first retaining groove 301 or the second retaining groove 302, the resilient member 4 will press downward on the bottom plate portions 312 of the retaining members 31 and prevent the retaining members 31 from swinging away from the locking seat 213.

Subsequently in the coffee brewing procedure, the user fills the portafilter with either a single serving or a double serving of ground coffee, and tamps the ground coffee into a coffee puck. Next, the user holds the handle 14 of the portafilter and attaches the portafilter to the coffee maker 9 for coffee brewing to begin. During the coffee brewing, highly pressurized water near boiling point provided by the coffee maker 9 will flow into the containing space 20 and pass through the coffee puck, the filter member 211, and the funnel-shaped mounting seat 212, and finally the brewed coffee will outlet from the nozzles 110 of the base seat 11 into a cup below the portafilter.

After all the brewed coffee has been collected in the cup, the coffee puck should be removed and the portafilter cleaned. The portafilter is first detached from the coffee maker 9. Then, the driving member 32 is operated to drive movement of the retaining members 31 to the releasing position and the filter holding module 21 will be propelled upwardly by a restoring force of the resilient member 4 and will disengage from the retaining members 31. More specifically, regardless of whether it was the single serving or the double serving of coffee that was brewed, and therefore whether the engaging portion 214 of the filter holding module 21 is engaged with the first or the second retaining grooves 301, 302, upwards movement of the drive member 32 will drive the retaining members 31 to move to the releasing position to thereby disengage the engaging portion 214 of the filter holding module 21 from either the first or the second retaining grooves 301, 302, and the filter holding module 21 will be propelled upwardly by the restoring force of the resilient member 4 and will disengage from the retaining members 31, thereby causing the coffee puck to be propelled from the portafilter and discarded.

It should be noted that when the filter holding module 21 is propelled upwardly by the restoring force of the resilient member 4, the upward movement of the filter holding module 21 will eventually be stopped by the engaging portion 214 abutting against the dividing wall 13. When the filter holding module 21 is stopped, it is located at the top end of the contatining space 20, and such configuration ensures removal of the expended coffee puck from the retaining space 20.

In this embodiment there are three retaining members 31, three connecting hubs 111, three positioning flanges 215, and three restricting blocks 318. However, this is not a limitation of the disclosure, and in other embodiments of the disclosure there may be only one or there may be more than three sets of the retaining members 31, the connecting hubs 111, positioning flanges 215, and restricting blocks 318.

In this embodiment, each retaining member 31 has two first protruding blocks 314 and two second protruding blocks 315; however, this is not a limitation of this disclosure, and in other embodiments there may be one, or three or more first and second protruding blocks 314, 315.

In summary of the above, in the portafilter according to the present disclosure, the user may operate the drive member 32 of the retaining unit 3, so that the filter holding module 21 is propelled upwardly (relative to the portafilter unit 1) by a restoring force of the resilient member 4. Therefore, by virtue of including the retaining unit 3 and the resilient member 4, the portafilter can quickly and easily discard the expended coffee puck from the portafilter unit 1. This avoids creating excessive noise when removing the coffee puck and facilitates easy cleaning of the portafilter. Therefore the portafilter according to the present disclosure has multiple advantages and is easy to operate.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A portafilter including a portafilter unit (1) including a base seat (11) and a surrounding wall (12) that is connected to a top peripheral end of said base seat (11);
**characterised in that**:
said portafilter further includes
a filter unit (2) mounted in said portafilter unit (1), including a filter holding module (21), and movable relative to said portafilter unit (1),
a resilient member (4) connected to a bottom end of said filter holding module (21), and
a retainer unit (3) including
at least one retaining member (31) that is mounted on said base seat (11), and that is swingable relative to said base seat (11) between a retaining position and a releasing position, and
a drive member (32) that is mounted on said base seat (11) and that is operable to drive movement of said at least one retaining member (31) to the releasing position;
when said at least one retaining member (31) is at the retaining position, said filter holding module (21) is downwardly movable relative to said portafilter unit (1) against a resilient force of said resilient member (4) until said filter holding module (21) engages said at least one retaining member (31) to position said filter holding module (21) relative to said portafilter unit (1); and
said filter holding module (21) is disengaged from said at least one retaining member (31) when said at least one retaining member (31) is driven by said driving member (32) to move to the releasing position, and is propelled upwardly by a restoring force of said resilient member (4).

2. The portafilter as claimed in Claim 1, **characterised in that**:
said filter holding module (21) includes a locking seat (213) that has an engaging portion (214);
said at least one retaining member (31) has a first retaining groove (301); and
when said at least one retaining member (31) is at the retaining position, said filter holding module (21) is downwardly movable relative to said portafilter unit (1) against the resilient force of said resilient member (4) until said engaging portion (214) of said locking seat (213) engages said first retaining groove (301) of said at least one retaining member (31) to position said filter holding module (21) relative to said portafilter unit (1).

3. The portafilter as claimed in Claim 2, **characterised in that**:
said retaining member (31) further has a second retaining groove (302) below said first retaining groove (301); and
when said at least one retaining member (31) is at the retaining position with said engaging portion (214) of said locking seat (213) engaging said first retaining groove (301) of said at least one retaining member (31), said filter holding module (21) is further downwardly movable relative to said portafilter unit (1) against the resilient force of said resilient member (4) until said engaging portion (214) of said locking seat (213) engages said second retaining groove (302) of said at least one retaining member (31) to position said filter holding module (21) relative to said portafilter unit (1).

4. The portafilter as claimed in Claim 3, **characterised in that**:
said at least one retaining member (31) includes
a retaining portion (311) that is up-right when said at least one of said retaining member (31) is at the retaining position, and that has said first and second retaining grooves (301, 302),
a bottom plate portion (312) that is transverse to a bottom end of said retaining portion (311), and that is disposed under and in contact with said resilient member (4), and
a connecting portion (313) that is disposed between said retaining portion (311) and said bottom plate portion (312), and that is connected to said base seat (11) of said portafilter unit (1); and
said drive member (32) extends through the base seat (11), has an upper surface being in contact with said bottom plate portion (312) of said at least one retaining member (31) such that, when said engaging portion (214) of said filter holding module (21) engages either one of said first and second retaining grooves (301, 302), upward movement of said drive member (32) drives said at least one retaining member (31) to move to the releasing position to thereby disengage said engaging portion (214) of said filter holding module (21) from said one of said first and second retaining grooves (301, 302).

5. The portafilter as claimed in Claim 4, **characterised in that**:
said locking seat (213) is substantially tubular and extending vertically, said engaging portion (214) being annular and located on a bottom end of said locking seat (213);
said at least one retaining member (31) includes a plurality of retaining members (31) that are disposed around said locking seat (213);
said base seat (11) includes a plurality of connecting hubs (111) that are disposed on a top side of said base seat (11), and that are respectively connected to said connecting portions (313) of said retaining members (31); and
said drive member (32) is located at a center of said base seat (11) with said top surface thereof being in contact with said bottom plate portions (312) of said retaining members (31).

6. The portafilter as claimed in any one of Claims 2 to 5, **characterised in that**:
said filter holding module (21) further includes a filter member (211), and a mounting seat (212) that is funnel-shaped, that is mounted with said filter member (211), and that is coupled to a top end of said locking seat (213); and
said resilient member (4) is disposed under said mounting seat (212) and extends past said locking seat (213) .

7. The portafilter as claimed in any one of Claims 1 to 5, **characterised in that** said base seat (11) is formed with a plurality of nozzles (110) extending vertically therethrough.

8. The portafilter as claimed in any one of Claims 1 to 5, **characterised in that**:
said portafilter unit (1) further includes a filter container wall (15) that is substantially tubular, and that is removably mounted to an inner surface of said surrounding wall (12);
said filter member (211) of said filter holding module (21) and said filter container wall (15) co-operatively define a containing space (20) adapted for holding ground coffee.

9. The portafilter as claimed in Claim 6, **characterised in that**:
said portafilter unit (1) further includes a first seal member (16) that is disposed between said surrounding wall (12) and said base seat (11); and
said filter unit (2) further includes a second seal member (22) that is disposed between said mounting seat (212) and said portafilter unit (1).

10. The portafilter as claimed in any one of Claims 1 to 5, **characterised in that** said retainer unit (3) further includes a third seal member (33) that is disposed between said base seat (11) and said drive member (32).

11. A coffee maker (9) **characterised by** said portafilter as claimed in any one of Claims 1 to 10.
